# EUROPEAN PATENT SPECIFICATION

(11) **EP 1 565 669 B1**
(45) Date of publication and mention of the grant of the patent: **07.05.2008**
(21) Application number: 03773846.5
(22) Date of filing: 10.11.2003
(51) Int. Cl.: F16F 7/12

(54) **REUSABLE ENERGY DISSIPATION DEVICE**
WIEDERVERWENDBARE ENERGIEABSORPTIONSVORRICHTUNG
DISSIPATEUR D'ENERGIE REUTILISABLE

(30) Priority: 14.11.2002 GB 0226611
(43) Date of publication of application: 24.08.2005
(73) Proprietor: Osman, Fayek, Claverton Down Bath Avon BA2 7AY (GB)
(72) Inventor: Osman, Fayek, Claverton Down Bath Avon BA2 7AY (GB)
(86) International application number: PCT/GB2003/004870
(87) International publication number: WO 2004/044450

(56) References cited:
- DE-A- 4 206 716
- US-A- 3 380 557
- US-A- 3 833 093
- US-A- 3 975 006
- US-A- 4 262 778

## Description

The present invention relates to a device for dissipating unwanted energy associated with a shock or impact force.

Devices for dissipating the unwanted energy associated with an impact have long been employed in many industries. Devices may be provided for safety purposes, to significantly reduce cost of maintenance or replacement of parts, and to increase product life.

For example, road vehicles are routinely provided with shock absorbers to protect the vehicle and its occupants on an impact. Crash barriers, impact buffers, seat belts and crash helmets also need to be able to cope with a sudden impact. Moving parts in engineering machinery need to be designed safely to cope with impacts. Decelerators in lifts or in aerospace applications need to be adapted to cope with a sudden impact. Some sports equipment needs to incorporate shock absorbers. Artificial joints and limbs need to be able to cope with impacts. Large buildings, bridges and other structures need to incorporate energy absorption devices in case of earthquakes or strong winds.

The above list of applications of energy dissipation devices is not comprehensive; such devices are required in a wide range of applications at every scale.

There are numerous problems with the energy dissipation devices currently known. Hydraulic systems for example, can be very expensive since they involve complicated circuit designs and require numerous components including seals and valves integrated into a complicated structure. Netted, honeycomb-like structures rely on complete destruction of the mechanism in order to absorb energy; such devices cannot be reused which means that recovery after an impact is expensive and time consuming.

US - 3 975 006 describes an impact kinetic energy absorber. The kinetic energy of impact is absorbed by compressing plastic material in an impact receiving container having a movable wall for receiving the impact, and forcing plastic material to be extruded through an orifice into a second container filled with plastic material. The plastic material under compression in said second container after said impact forces plastic material to be extruded back through said orifice and into said first container to return the moveable wall to its original position.

US - 3 833 093 describes a cyclic energy absorber in which the absorbing element is lead, contained between two concentric elements which include an orifice through which the lead is forced to pass. The lead absorbs energy on being deformed as it passes through the orifice.

US - 4 262 778 describes a high absorption bumper device for vehicles, in which kinetic energy is absorbed by the plastic deformation of metals having a high resistance to deformation. A structure, acting as a receiver of kinetic energy, according to the invention is formed by a chamber having relatively small dimensions, produced from a metal or metal alloy. Impact energy is transmitted to the chamber by a fluid which is only slightly compressible. The fluid is compressed at the moment of impact and exerts stresses on the internal face of the chamber wall which rapidly exceed the elastic limit of the metal or alloy forming the chamber and cause expanding plastic deformation.

It is an object of the present invention substantially to overcome or mitigate the above-mentioned problems of conventional energy dissipation devices.

According to a first aspect of the invention, there is provided an energy dissipation device comprising:
a block of relatively rigid resilient material;
a passageway in the block, the passageway having an angled portion of substantially constant cross-sectional shape and area;
a plug of relatively deformable material in the passageway;
an impact receptor of relatively rigid material;
the material used to construct the block and impact receptor being rigid relative to the material used to construct the plug, the material used to construct the plug being deformable relative to the material used to construct the block and the impact receptor;
the arrangement being such that, when a force is applied to the impact receptor, the impact receptor moves at least partially into the passageway and impacts upon the plug to cause the plug to be driven around the angled portion of the passageway.

The angled portion of the passageway can be any cross sectional shape or area. It should be understood that the material(s) used to construct the housing block and impact receptor is/are rigid relative to the material(s) used to construct the plug. In this way, the plug is forced to deform around the angled portion of the passageway, whilst the housing block and the impact receptor remain substantially unchanged. The housing block is also required to be reasonably resilient, that is, to return substantially to its original configuration once stresses have been removed. The impact receptor may also be reasonably resilient.

It should also be understood that use of the word "angled" does not imply a sudden change in direction. It includes both a curve and a sudden angular change in direction.

The angled portion may be divided, such that the working material passes into several passageways simultaneously. For example, there may be a central longitudinal portion which divides at one end into a plurality of radially extending portions; it is also possible for the radially extending portions to be joined with one another to form a continuous disc-like passageway around and adjoining the end of the central longitudinal portion.

Preferably, the energy dissipation device also includes a second impact receptor of relatively rigid material, the arrangement being such that the device is reusable such that if a force is applied to the second impact receptor, the second impact receptor moves at least partially into the passageway and impacts upon the plug to cause the plug to be driven around the angled portion of the passageway in the reverse direction.

In this way, the energy dissipation device is reusable in three ways. Firstly, the working material can be forced to pass around the angled portion of the passageway in a number of discrete steps, that is, the device can be used again and again at the same orientation. Secondly, by inserting one or more additional plugs into the passageway. Thirdly, the device can be reused, for example, by rotating it to an orientation in which a force applied to the second impact receptor forces the working material around the angled portion of the passageway in the reverse direction.

In an embodiment of the invention, the plug is made from more than one piece of relatively deformable material. For example, there may be a number of pieces of the plug, stacked in series.

In an embodiment of the invention, the angled portion of the passageway is angled through a right angle. In another embodiment, the angled portion of the passageway is angled through a U-bend.

In an embodiment of the invention, the impact receptor is provided with a threaded portion for engagement with a threaded portion provided in the passageway, such that rotational movement of the impact receptor causes the impact receptor to move at least partially into the passageway.

In an embodiment of the invention, the energy dissipation device further includes
a plurality of passageways in the block, each passageway having an angled portion of substantially constant cross-sectional shape and area;
a plug of relatively deformable material in each passageway; and
a plurality of impact receptors of relatively rigid material.
The plugs of working material in each passageway may have different properties.

According to the invention, there is also provided an energy dissipation apparatus comprising a number of energy dissipation devices linked together, each device being as described above.

According to a second aspect of the invention, there is also provided a method of dissipating energy comprising the steps of:
providing a block of relatively rigid resilient material containing a passageway, the passageway having an angled portion; and
driving a plug of relatively deformable material around the angled portion of the passageway, the material used to construct the block being rigid relative to the material used to construct the plug, the material used to construct the plug being deformable relative to the material used to construct the block.

It should be understood that features described in relation to one aspect of the invention may be incorporated into another aspect of the invention, wherever appropriate. Simply as an example, the invention as defined in the second aspect may have an angled portion of the passageway that is a right angle or is angled through a U-bend.

By way of example, certain embodiments of the invention will now be described with reference to the accompanying drawings, of which:
- Figure 1: is a perspective view of an energy dissipation device
- Figure 2a: is a schematic diagram of the energy dissipation device before impact;
- Figure 2b: is a schematic diagram of the energy dissipation device during impact;
- Figure 2c: is a schematic diagram of the energy dissipation device after impact;
- Figure 3: is a schematic diagram of the energy dissipation device in Figure 2c after impact, rotated so as to be reusable;
- Figure 4: shows the energy dissipation device used with a safety beam;
- Figure 5: shows the energy dissipation device used in an application involving rotational motion;
- Figure 6: shows the energy dissipation device used in an application involving oscillatory motion;
- Figure 7: is a further diagram of the energy dissipation device used in an application involving oscillatory motion;
- Figure 8: shows the energy dissipation device in a pivotal arrangement for reacting to lateral forces;
- Figure 9: shows the energy dissipation device used in an application involving linear reciprocating motion;
- Figure 10: shows an energy dissipation device adapted to provide controlled deceleration;
- Figure 11: shows a number of energy dissipation devices connected together to form a compressible stack;
- Figure 12: shows three energy dissipation devices linked together to form a larger unit;
- Figure 13: shows a number of energy dissipation devices linked together in a network;
- Figure 14: shows a prototype of the device used for conducting experimental tests; and
- Figure 15: shows experimental results of tests carried out on the prototype of Figure 14.

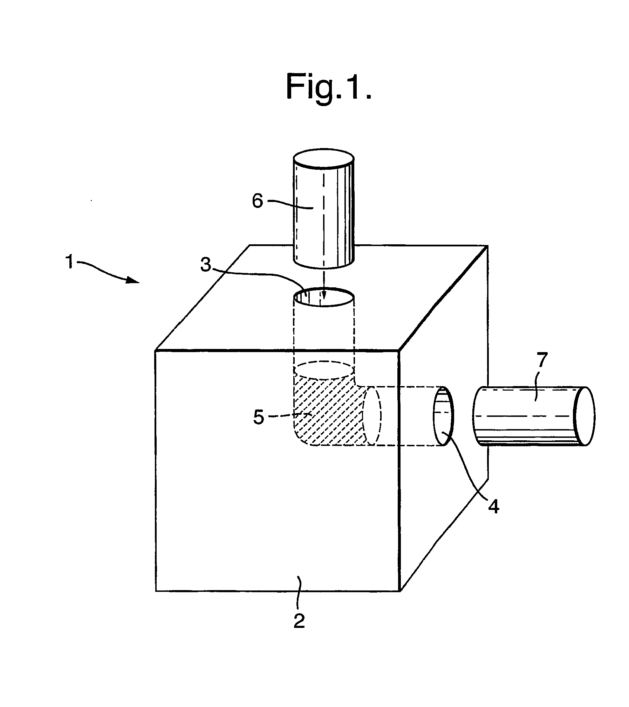

Figure 1 shows an embodiment of the energy dissipation device 1 according to the invention. A housing block 2 includes a passageway with an entry region 3 and an exit region 4. In the passageway is a plug 5 of working material, at least partially in the entry region of the passageway. In the vicinity of the entry region 3 is an impact receptor 6 and in the vicinity of the exit region 4 is a reverse impact receptor 7.

A force impacts upon the impact receptor 6 which then moves through the entry region 3 of the passageway (as shown by the arrow) and transmits the force to the plug 5 of working material.

The working material is a non-liquid material that is capable of being deformed to pass around the bend between the entry region 3 and the exit region 4. The plug can be constructed from one or more pieces. The working material can be for example plastic, rubber, compressed fibre, compressed powder, metal (for example aluminium) or a combination of suitable materials. The housing block may be any shape. The housing block and the impact receptors are generally made from material, which, relative to the working material, is rigid.

The housing block is also required to be reasonably resilient, that is, to return substantially to its original configuration once stresses have been removed. The impact receptor may also be reasonably resilient.

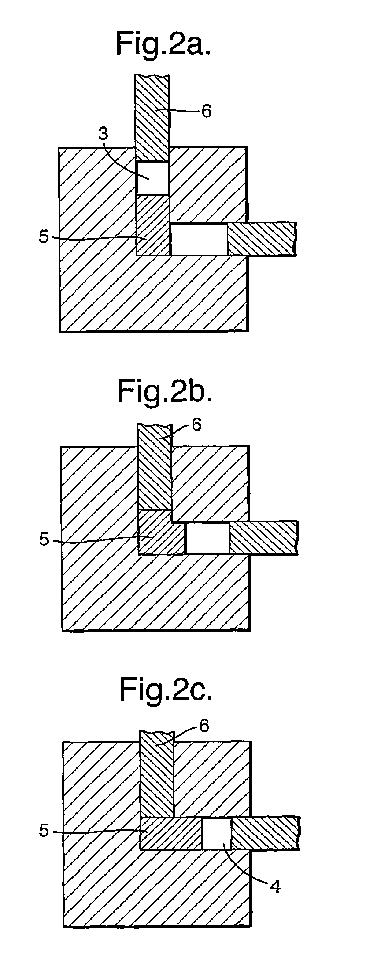

Figures 2a to 2c show the device during operation. Figure 2a shows the plug 5 of working material in its normal position and form before an impact. Figure 2b shows the working material during impact. A force is exerted upon the impact receptor 6 which moves down into the entry region 3 of the passageway. The impact receptor 6 abuts the plug 5 of working material and the impact force drives the working material around the bend in the passageway. As the working material is driven around the bend, energy is dissipated by the deformation of the working material. Figure 2c shows the working material after impact once all the impact energy has been dissipated.

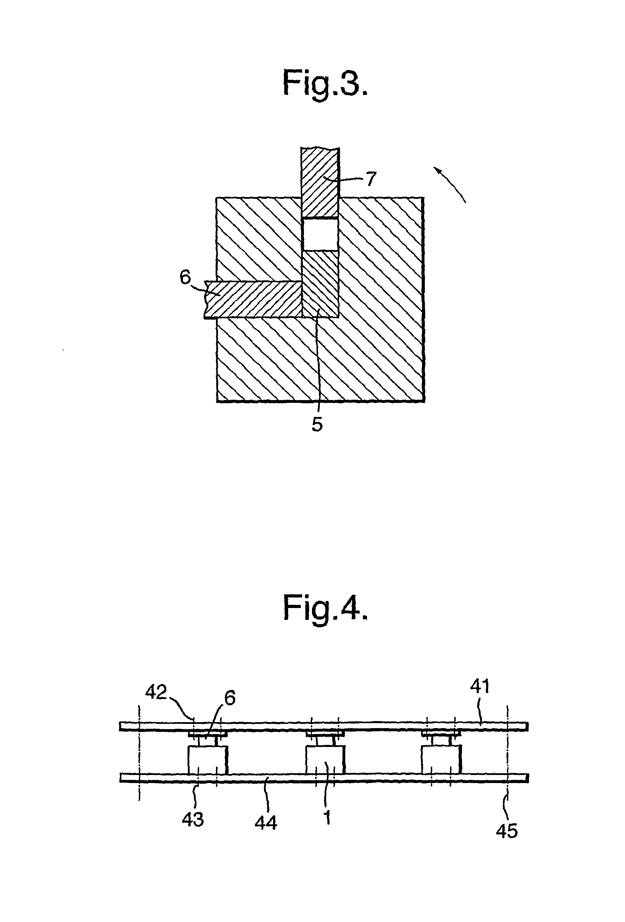

Once the impact has occurred and all the energy has been dissipated, the working material is partially or fully within the exit region 4. Figure 3 shows how the device can be rotated (as shown by the arrow) once it has been used, so that it is ready for use again. The entry and exit regions are reversed and the force will impact upon the reverse impact receptor 7. In this way, the device can be reused, simply by rotating the device, without any restructuring or alteration of the device itself.

An important mechanism by which energy is dissipated in the device is the internal shearing of the working material, as will now be described with reference to Figures 1 to 3. It should be understood that the same shearing mechanism is present in all of the described embodiments. As the working material passes through a right-angled change in direction, that change can be accommodated by internal shearing along a single plane of the material (namely that plane which passes through the corner of both the inner and outer boundaries of the passageway); the other regions of the material remain unaffected. In practice, even in the case of a sharp right-angled change in direction, the region of shearing extends somewhat outside the shearing plane, but the majority of the working material is still unaffected as the material passes around the bend. As the working material passes around a more gentle curve, the shearing occurs in a plurality of planes in the curved region. The shearing again occurs substantially in the shearing planes and the other regions of the material are unaffected as the material passes around the bend.

The magnitude of the impact force will vary from one application to the next and the energy dissipation device can be adapted to be used in a number of applications. A variety of design adjustments can be made to take account of the predicted impact force and the magnitude of the energy to be dissipated by deformation of the working material, and some of these are outlined below.

The working material can be altered. The plug can be made of one or more types of material. Certain materials will easily deform to pass around the bend between the entry region and the exit region, thereby requiring a smaller impact force than materials which are more difficult to deform. The type of material can be chosen for the particular application and environmental parameters; for example, temperature affects the load required to cause the deformation.

The amount of working material can also be varied, and as mentioned above, the plug can be formed from one or a number of pieces. The pieces may be constructed from the same or different types of material (including those that fluidise under high pressure).

The shape of the external end of the impact receptor 6 (and the reverse impact receptor 7) can be varied according to the contact surface required at impact.

The entry region and exit region may intersect at any angle. For example, this could be such that the entry and exit regions are parallel and the working material has to pass around a complete U-bend. Also, the entry and exit regions can be linked together through a plane or circular bend or any other zig-zag connection.

In use, the device can be positioned at any orientation.

Simple standard tests can be applied to the device to measure the maximum impact force, the speed of deceleration and the maximum energy that can be dissipated, thereby ensuring the device is appropriate for the desired application.

Figures 4 to 13 show the energy dissipation device used in a number of different applications.

Figure 4 shows three devices 1 used together for a safety beam 41. The impact receptor 6 of each device is connected by fixing screws 42 to the safety beam 41. Each device 1 is connected by fixing screws 43 to a base 44. The safety beam 41 and the base 44 are connected to each other via a bolt 45 which is free to move relative to the base and/or safety device when there is an impact. In this application, the impact force can be from above or from below, and does not have to be perpendicular to the safety beam 41 or the base 44.

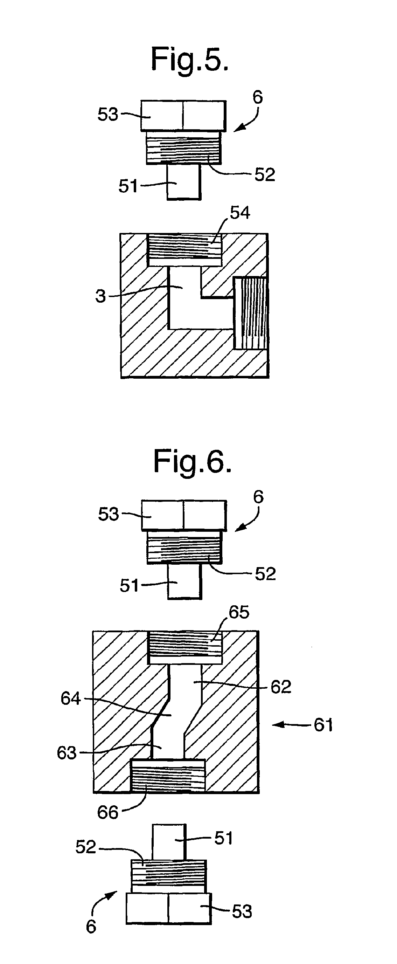

Figure 5 shows the device used to dissipate energy on sudden rotational movement rather than simple linear movement. The impact receptor 6 includes a channel portion 51, a threaded portion 52 and a grip portion 53. The channel portion 51 moves vertically in the entry region 3 and, upon impact, makes contact with the plug of working material (not shown). The threaded portion 52 engages with a threaded region 54 in the channel. The grip portion 53 can be gripped with a suitable apparatus. In use, the rotational movement of the grip portion 53 is converted to linear movement of the channel portion 51 deforming the plug of working material and thereby dissipating energy.

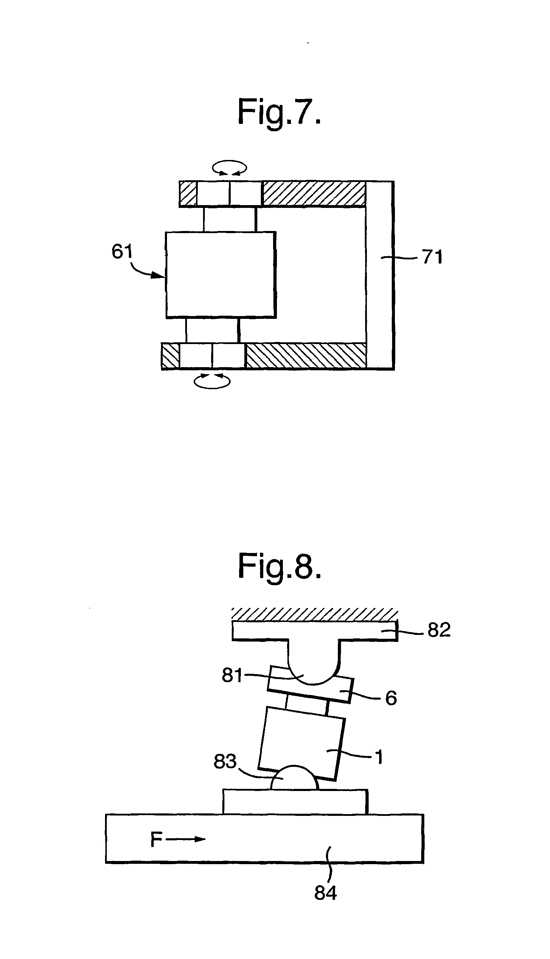

Figures 6 and 7 show the device used to dissipate energy in oscillatory motion. As in Figure 5, the impact receptor 6 includes a channel portion 51, a threaded portion 52 and a grip portion 53. The unit 61 includes two entry regions 62 and 63. Between the entry regions 62, 63 is located a staggered section 64. The plug of working material (not shown) is located within the staggered section and may extend into one or both entry regions. At each entry region 62, 63 the threaded portion 52 of the impact receptor 6 engages with the threaded regions 65, 66 respectively. Threaded regions 65 and 66 are threaded such that, when the impact receptors at each entry region are rotated in the same rotational direction, the impact receptors moves in the same linear direction, that is one impact receptor moves into the unit while the other impact receptor moves out of the unit.

The two impact receptors can be joined by a frame 71 as shown in Figure 7. If the frame 71 is forced to rotate in one direction, one impact receptor 6 is forced into the unit 61 (while the other receptor moves out of the unit 61) and the plug of working material (not shown) will be deformed through the staggered section 64 of the passageway. When the frame 71 is forced to rotate back in the opposite direction, the process is reversed, and the plug of working material (not shown) is forced to deform through the staggered section 64 in the opposite direction. The unit 61 can thereby act to dissipate energy during oscillatory motion.

Figure 8 shows the device used to dissipate energy when the impact force is directed laterally at an angle to the direction of movement of the impact receptor. The impact receptor 6 for the device 1 is pivotally attached to an upper unit 82 which is fixed. The pivotal attachment is via a ball-and-socket type joint 81 or the like. The device is pivotally attached to a base 84, which is free to move horizontally but not vertically. The pivotal attachment is via a second ball-and-socket type joint 83 or the like. Figure 8 shows the device at equilibrium. When a force is applied to the base 84 as shown by the arrow, the base 84 moves and the device 1 pivots relative to the base 84 so that the impact receptor moves into the device 1 and deforms the plug of working material (not shown). Whilst in Figure 8, the upper unit 82 is shown as fixed and the base 84 is shown as movable, it will be appreciated that, equally, the base 84 could be fixed and the upper unit could be movable.

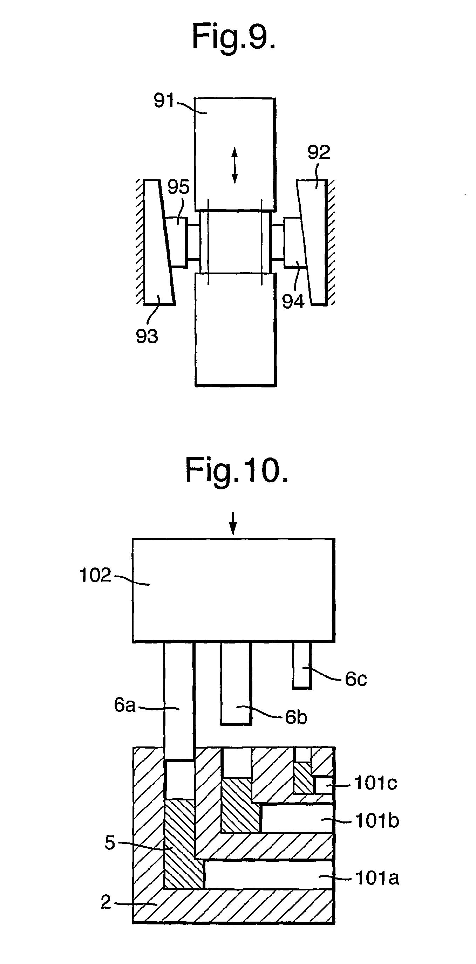

Figure 9 shows the device in an arrangement adapted to dissipate energy in linear reciprocating motion. Column 91 has a transverse staggered passageway similar to the staggered passageway of Figure 6 with receptors 94, 95 extending from opposite ends of the passageway and cammingly engaging sloping faces of fixed units 92, 93, those sloping faces being parallel to one another. When column 91 moves up, receptors 94, 95 both move to the left as seen in Figure 9 and when column 91 moves down, receptors 94, 95 both move to the right as seen in Figure 9. The whole system is thereby adapted to dissipate energy during linear reciprocating motion as shown by the double-headed arrow. Whilst in Figure 9, units 92 and 93 are shown as fixed and the column 91 is shown as movable, it will be appreciated that, equally, the column 91 could be fixed and the units 92, 93 could be movable together.

Figure 10 shows a version of the device suited for use, for example, in applications where controlled variable deceleration is desirable. The housing block 2 includes three passageways 101a, 101b and 101c. An impact block 102 includes impact receptors 6a, 6b and 6c which enter the passageways 101a, 101b and 101c respectively. Each passageway 101a, 101b, 101c includes a plug 5 of working material. When a force is applied to the block (as shown by the arrow), the impact receptor 6a moves into the passageway 101a and the plug 5 of working material in the passageway 101a passes around the bend in the passageway 101a. As the impact block 102 moves further in the direction of the arrow, the impact receptor 6b impacts upon the plug of working material in the passageway 101b and the plug 5 of working material in the passageway 101b passes around the bend in the passageway 101b. As the impact block 102 moves still further in the direction of the arrow the impact receptor 6c impacts upon the plug of working material in the passageway 101c and the plug 5 of working material in the passageway 101c passes around the bend in the passageway 101c. The passageways and associated impact receptors decrease in size.

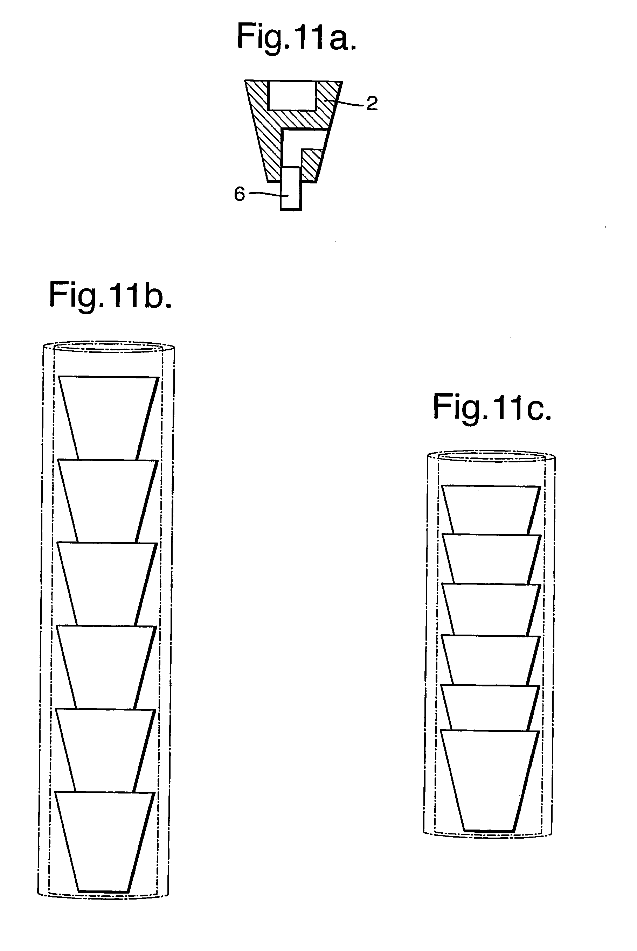

Figures 11a to 11c show a number of energy dissipation devices combined in a stack to form a compressible unit. Figure 11a shows one device. The impact receptor 6 is located at one end of the device and the housing block 2 is shaped to interlock with the housing blocks of the adjacent devices. Figure 11b shows the stack of devices in extended form before an impact. Figure 11c shows the stack of devices in compressed form after an impact.

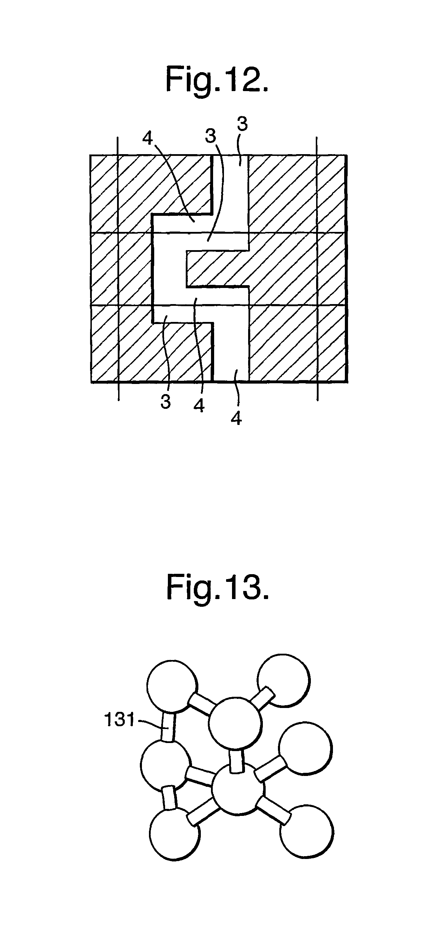

Figure 12 shows three devices linked together to form a larger unit. The passageway of each device is adapted such that the entry region 3 of one device is adjacent the exit region 4 of the adjacent device. The plug of working material (not shown) is driven around successive bends in the passageway. Any number of devices can be linked together in this way.

Figure 13 shows a number of energy dissipation devices combined in a network. Each link 131 between units is an impact receptor and the links are in a variety of directions such that the entire structure can be compressed or altered in shape and thereby dissipate energy. Each energy dissipation device as described previously, is adapted to dissipate the energy associated with a large impact force. In certain embodiments, however, for example in this network, the structure is designed to work with a number of small impact forces. In this network the forces can be in a variety of directions. The structures may be adapted to work with small forces by suitable choice of the working material. For example, the working material may be a wax or jelly-like substance.

A number of devices can also be linked together in other ways. The devices may be arranged with different properties so as to provide a gradual increase in deceleration from one end of the unit to the other.

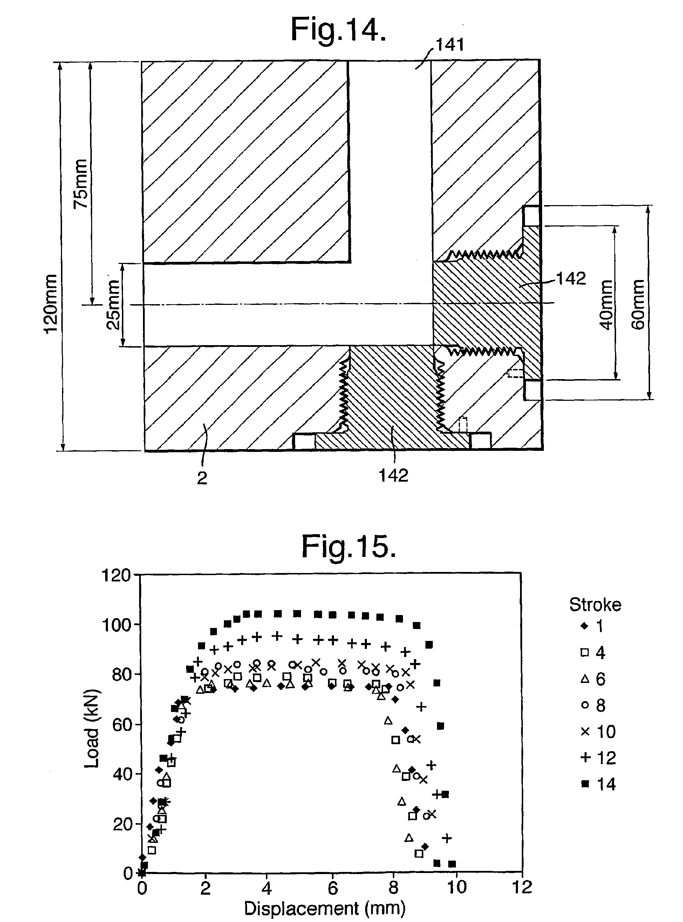

Figure 14 shows a prototype of a device used for conducting experimental tests. The device comprises a housing block 2 in the form of a cube measuring 120 mm along each edge. The passageway 141 is circular in cross section with a diameter of 25 mm. Incorporated into the design are two end plugs 142. These are fixed in the device when the device is being tested, but can be removed after the test to allow for easier withdrawal of material.

Figure 15 shows the experimental results from testing of the prototype of Figure 14. The tests employed a plug of working material measuring 60 mm in length and 25 mm in diameter, to fit snugly into the prototype passageway. The working material used was aluminium (Al 1200 F as received). The plug is driven through the channel by a 1000kN Rhodes hydraulic press at a constant speed and the load on the plug measured at fixed time intervals. The results obtained using a data acquisition system are shown for 14 separate tests. It can be seen that in each test, the working material is hardened slightly and therefore the load on the plug is slightly greater in the following test.

It will be understood that the various devices described above are merely certain examples of the invention and that many other arrangements are possible. Also, features described in respect of one of the devices may be applied, where appropriate, to any of the other devices.

## Claims

1. An energy dissipation device comprising:
a block of relatively rigid resilient material;
a passageway in the block, the passageway having an angled portion of substantially constant cross-sectional shape and area;
a plug (5) of relatively deformable material in the passageway;
an impact receptor (6) of relatively rigid material;
the material used to construct the block and impact receptor being rigid relative to the material used to construct the plug, the material used to construct the plug being deformable relative to the material used to construct the block and the impact receptor;
the arrangement being such that, when a force is applied to the impact receptor, the impact receptor moves at least partially into the passageway and impacts upon the plug to cause the plug to be driven around the angled portion of the passageway.

2. An energy dissipation device according to claim 1 also including a second impact receptor (7) of relatively rigid material, the arrangement being such that the device is reusable such that if a force is applied to the second impact receptor (7), the second impact receptor (7) moves at least partially into the passageway and impacts upon the plug (5) to cause the plug (5) to be driven around the angled portion of the passageway in the reverse direction.

3. An energy dissipation device according to claim 1 or 2, in which the plug (5) is made from more than one piece of relatively deformable material.

4. An energy dissipation device according to any one of claims 1, 2 or 3, in which the angled portion of the passageway is angled through a right angle.

5. An energy dissipation device according to any one of claims 1, 2 or 3, in which the angled portion of the passageway is angled through a U-bend.

6. An energy dissipation device according to any one of the preceding claims in which the impact receptor (6, 7) is provided with a threaded portion for engagement with a threaded portion provided in the passageway, such that rotational movement of the impact receptor (6, 7) causes the impact receptor to move at least partially into the passageway.

7. An energy dissipation device according to any one of the preceding claims further including
a plurality of passageways in the block, each passageway having an angled portion of substantially constant cross-sectional shape and area;
a plug (5) of relatively deformable material in each passageway; and
a plurality of impact receptors (6) of relatively rigid material.

8. An energy dissipation device according to claim 7, in which the plugs (5) of working material in each passageway have different properties from each other.

9. An energy dissipation apparatus comprising a number of energy dissipation devices linked together, each device being according to any one of the preceding claims.

10. A method of dissipating energy comprising the steps of:
providing a block of relatively rigid resilient material containing a passageway, the passageway having an angled portion; and
driving a plug (5) of relatively deformable material around the angled portion of the passageway, the material used to construct the block being rigid relative to the material used to construct the plug, the material used to construct the plug being deformable relative to the material used to construct the block.

## Patentansprüche

1. Ein Energiedissipationsapparat bestehend aus:
einem Block aus relativ steifen, belastbarem Material;
einer Passage im Block mit einem abgewinkeltem Stück konstanten Querschnitts;
einem Pfropfen (5) aus deformierbaren Material in der Passage;
einem Stoßaufnehmer (6) aus relativ steifen Material;
Material für Block und Stoßaufnehmer welches steif ist verglichen mit Pfropfenmaterial, Pfropfenmaterial welches deformierbar ist verglichen mit dem Material für Block und Stoßaufnehmer;
Anordnung, so dass der Stoßaufnehmer bei Krafteinwirkung zumindest teilweise in die Passage gedrückt und der Pfropfen um die abgewinkelte Passage getrieben wird.

2. Ein Energiedissipationsapparat gemäß Anspruch 1, mit einem zweiten Stoßaufnehmer (7) aus relativ steifen Material mit einer Anordnung die gewährleistet, dass der Apparat wiederverwendbar ist falls eine Kraft auf den zweiten Stoßaufnehmer (7) aufgebracht wird. Dabei wird der zweite Stoßaufnehmer (7) bei Krafteinwirkung zumindest teilweise in die Passage gedrückt und der Pfropfen (5) um die abgewinkelte Passage zurück getrieben.

3. Ein Energiedissipationsapparat gemäß Anspruch 1 oder 2, in welchem der Pfropfen (5) aus mehr als einem Stück deformierbarem Material gefertigt wird.

4. Ein Energiedissipationsapparat gemäß Anspruch 1, 2 oder 3, in welchem das abgewinkelte Stück der Passage einem rechten Winkel aufweist.

5. Ein Energiedissipationsapparat gemäß Anspruch 1, 2, 3, oder 4 in welchem das abgewinkelte Stück der Passage eine U-Biegung aufweist.

6. Ein Energiedissipationsapparat gemäß einem der obigen Ansprüche, in welchem der Stoßaufnehmer (6,7) mit einem Gewinde versehen ist, welches in ein Gewinde der Passage greift, so dass bei Rotation des Stoßaufnehmers (6,7) dieser zumindest teilweise in die Passage getrieben wird.

7. Ein Energiedissipationsapparat gemäß einem der obigen Ansprüche, der überdies aufweist:
mehrere Passagen im Block, wobei jede ein abgewinkeltes Stück konstanten Querschnitts aufweist
ein Pfropfen (5) aus deformierbaren Material in jeder Passage und
mehrere Stoßaufnehmer (6) aus relativ steifen Material

8. Ein Energiedissipationsapparat gemäß Anspruch 7, in welchem die Pfropfen (5) in den Passagen verschiedene Eigenschaften aufweisen.

9. Ein Energiedissipationsapparat, welcher aus mehreren verbundenen Energiedissipationsapparaten gemäß obigen Ansprüchen besteht.

10. Eine Energiedissipationsmethode
bestehend aus einem Block aus relativ steifen, belastbarem Material und einer Passage im Block mit einem abgewinkeltem Stück konstanten Querschnitts;
Ein Pfropfen (5) aus deformierbaren Material wird um das abgewinkeltem Stück konstanten Querschnitts in der Passage getrieben. Das Material für Block ist steif verglichen mit dem Pfropfenmaterial, das Pfropfenmaterial ist deformierbar verglichen mit dem Material für den Block.

## Revendications

1. Un dispositif de dissipation d'énergie comprenant:
un bloc de matériau élastique relativement rigide;
un passage dans le bloc, le passage ayant une portion orientée de section de forme et d'aire substantiellement constante
un boisseau (5) en matériau relativement déformable dans le passage;
un récepteur d'impact (6) en matériau relativement rigide;
le matériau utilisé pour fabriquer le bloc et le récepteur d'impact étant rigide par rapport au matériau utilisé pour la fabrication du boisseau, le matériau utilisé pour fabriquer le boisseau étant déformable par rapport au matériau utilisé pour la fabrication du bloc et du récepteur d'impact,
la disposition étant telle que, quand une force est appliquée au récepteur d'impact, le récepteur d'impact se déplace au moins partiellement à l'intérieur du passage et agit sur le boisseau pour causer son déplacement autour de la portion orientée du passage.

2. Un dispositif de dissipation d'énergie selon la revendication 1 comprenant aussi un second récepteur d'impact (7) en matériau relativement rigide, la disposition étant telle que le dispositif est réutilisable telle que si une force est exercée au second récepteur d'impact (7), le second récepteur d'impact (7) se déplace au moins partiellement à l'intérieur du passage et agit sur le boisseau (5) pour causer le déplacement du boisseau (5) autour de la portion orientée du passage dans le sens inverse.

3. Un dispositif de dissipation d'énergie selon les revendications 1 ou 2, dans lequel le boisseau (5) est constitué de plus d'une pièce en matériau relativement déformable.

4. Un dispositif de dissipation d'énergie selon n'importe laquelle des revendications 1, 2 ou 3, dans lequel la portion orientée du passage est orientée suivant un angle droit.

5. Un dispositif de dissipation d'énergie selon n'importe laquelle des revendications 1, 2 ou 3, dans lequel la portion orientée du passage est en forme de U.

6. Un dispositif de dissipation d'énergie selon n'importe laquelle des revendications précédentes, dans lequel le récepteur d'impact (6, 7) est muni d'une partie filetée pour se visser avec une partie filetée du passage, tel que le mouvement rotatif du récepteur d'impact cause le déplacement du récepteur d'impact au moins partiellement à l'intérieur du passage.

7. Un dispositif de dissipation d'énergie selon n'importe laquelle des revendications précédentes comprenant en plus
plusieurs passage à l'intérieur du bloc, chaque passage ayant une portion orientée de section substantiellement de forme et d'aire constant.
un boisseau (5) en matériau relativement déformable à l'intérieur de chaque passage ; et
plusieurs récepteurs d'impact (6) de matériau relativement rigide

8. Un dispositif de dissipation d'énergie selon la revendication 7, dans lequel les boisseaux (5) à l'intérieur de chaque passage ont des propriétés différentes les unes des autres.

9. Un appareil de dissipation d'énergie comprenant un nombre de dispositifs de dissipation d'énergie liés ensemble, chaque dispositif étant selon n'importe laquelle des revendications précédentes.

10. Une méthode de dissipation d'énergie consistant à:
fournir un bloc de matériau élastique relativement rigide contenant un passage, le passage ayant une portion orientée; et
déplaçant un boisseau (5) de matériau relativement déformable autour de la portion orientée du passage, le matériau utilisé pour fabriquer le bloc étant rigide par rapport au matériau utilisé pour fabriquer le boisseau , le matériau utilisé pour fabriquer le boisseau étant déformable par rapport au matériau utilisé pour la fabrication du bloc et du récepteur d'impact.
